# EUROPEAN PATENT SPECIFICATION

(11) **EP 3 293 073 B1**
(45) Date of publication and mention of the grant of the patent: **18.12.2019**
(21) Application number: 16786008.9
(22) Date of filing: 21.04.2016
(51) Int. Cl.: B62B 3/14, B62B 3/18

(54) **CART FOR SHOPPING IN SUPERMARKETS AND SIMILAR**
WAGEN ZUM EINKAUFEN IN SUPERMÄRKTEN ODER DERGLEICHEN
CHARIOT POUR FAIRE DES ACHATS DANS DES SUPERMARCHÉS ET ANALOGUES

(30) Priority: 28.04.2015 ES 201530479 U
(43) Date of publication of application: 14.03.2018
(73) Proprietor: Creaciones Marsanz, S.A., 28850 Torrejon de Ardoz Madrid (ES)
(72) Inventor: MILLAN FERNANDEZ, Javier, 28850 Torrejon De Ardoz Madrid (ES)
(74) Representative: Botella Reyna, Juan
(86) International application number: PCT/ES2016/070291
(87) International publication number: WO 2016/174289

(56) References cited:
- EP-A1- 0 916 563
- EP-A1- 1 400 428
- WO-A1-97/30880
- WO-A1-97/30880
- CN-U- 202 669 890
- DE-C1- 10 034 331
- ES-A1- 2 399 779
- US-A- 3 999 774
- US-A- 5 255 930
- US-A- 5 961 133
- US-A1- 2005 212 235

## Description

### OBJECT OF THE INVENTION

The present invention as defined in claim 1 relates to a cart for shopping in supermarkets and similar, i.e. for its use as means of transport of the products one intends to buy in an establishment of said type, and wherein the cart has a series of particular characteristics as regards assembly of the wall which forms the rear pivoting side of the cart, and the assembly of the side and rear tubes of the cart structure with respect to a tubular guide established for said purpose in the basket forming part of the cart. The invention relates to an ergonomic and functional cart that is easy to handle and has smaller dimensions than traditional carts, which is suitable for use in shopping halls or small areas.

### BACKGROUND OF THE INVENTION

There are numerous and varied carts used in supermarkets and shopping centres for the transport of the purchases made before passing through checkout and paying the corresponding amount.

Currently, the carts are usually formed by a kind of basket of plastic material, with four legs finished in self-orienting wheels, at least two of them, for the movement of the cart by the user.

Carts are also known that incorporate a kind of upper perimeter rail that enables the gripping of any part of the cart and that it can be moved with no problems.

In said sense, we can cite the cart corresponding to the Spanish patent of invention ES2409529, of the firm ARAVEN, S.L., filled on 14.03.2013, of inventors LORENZO RODRIGUEZ, Victor Julián; MANZANARES FERNANDEZ, Laura; MARTINEZ HANSEN, Maria; MODREGO CORTÉS, Eric; AZNAR PELlGERO, Francisco Javier; GIMENO VERDEJO, Isabel; LAYUS TORIJANO, Javi r; ESTEBAN GUALLAR, Elena and SAVIRÓN CORNUDELLA, Blanca, that disclose a shopping trolley, with general characteristics such as those stated, centring said registration on the assembly of the rear pivoting wall to allow the housing of carts in one another, reducing the volume in inoperative position.

More over the two following documents describe the state of the art
The Patent WO 97/30880 A1 of the Italian firm COMITAL S.R.L. of the inventor BERGIA MICHELANGELO, on which the preamble of claim 1 is based, that disclose a supermarket trolley having a moulded plastic material construction which enables to overcome in an efficient and functional way the inconveniences both of the traditional metal trolleys and of the already known at that date, plastic material trolleys.

The European Patent EP 1400428 of the Italian firm PLASTIMARK S.P.A. that disclose a trolley of the kind comprising a base made of moulded plastic material with wheels and a support formed integral with the base and including two lateral uprights connected superiorly by a cross bar, and a basket container also made of moulded plastic material connected at an end to said lateral uprights of the base.

### DESCRIPTION OF THE INVENTION

The cart claimed, formed from a basket with latticed walls as is conventional, lower frames that serve as legs with wheels for the movement, an upper and rear handlebar for handling the cart by the user, and a rear pivoting wall from a vertical operating position to a position towards the interior of the cart to enable the housing of carts in one another, has a series of innovations from which substantial and considerable improvements are derived with respect to said carts.

More specifically, one of the improvements of the cart of the invention consists of the form of assembly of the rear pivoting wall, which is removable, and has a tubular section at each one of the upper edge ends, so that between those two end tubular sections is mounted the corresponding tube which will form the cart handlebar, with the particular characteristic that that tube at its ends is embedded and fixed in a cylindrical terminal by way of a box established for that purpose in each one of the upper ends of the cart structure, fixing the tube to that terminal by means of a screw and the corresponding nut.

This solution is enormously simple in terms of assembly of the rear pivoting wall, in combination with the tube which forms the handlebar, enabling the easy and fast removal to be able to exchange deteriorated parts.

Another novel characteristic is that on the rear sides of the cart structure respective tubes are established located in a lower section that serve as a guide, wherein the lower end of the tube is embedded, and an upper section established in said structure, so that said lower section that serves as a guide is extended throughout the height, in correspondence with a covering part of the sides, said covering part having an appendix in the form of a wedge to enable the corresponding assembly and removal.

Likewise, it is provided that the wheel frames are formed by preferably tubular elements, of rectangular section with rounded corners, and wherein the arms that form the frame of the front wheels are converging forward, and are joined together by their lower end by a kind of rigidization crossbar, whilst the arms that form the rear legs have upper separation and are joined to the arms that form the front legs by means of side elements by way of diagonal straps.

Said frames integrate between them an orthogonal dihedral grille, determining a lower tray as an additional loading element that enables increasing the cart capacity in the event the basket capacity is insufficient.

These and other characteristics shall be stated throughout the present description that shall be made based on the drawings detailed below.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

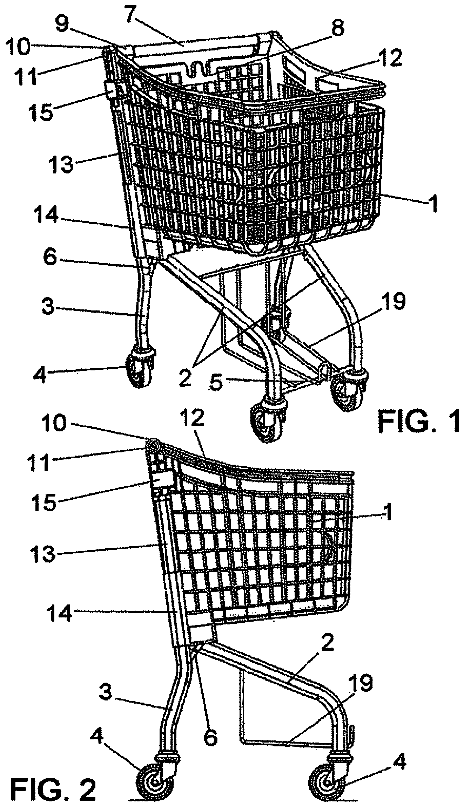

Figure 1 .- Shows a representation corresponding to a perspective view of a cart for shopping in supermarkets and similar made in accordance with the object of the present invention.
Figure 2 .- Shows a side elevational view of the cart of the previous figure.
Figure 3 .- Shows a perspective view of the cart basket and in a dismantled exploded situation the rear pivoting wall that closes said basket.
Figure 4 .- Shows a sectional detail of the form of assembly of the tube which forms the handlebar, the assembly whereof is performed with respect to the pivoting wall and the structure corresponding to the cart basket or receptacle.

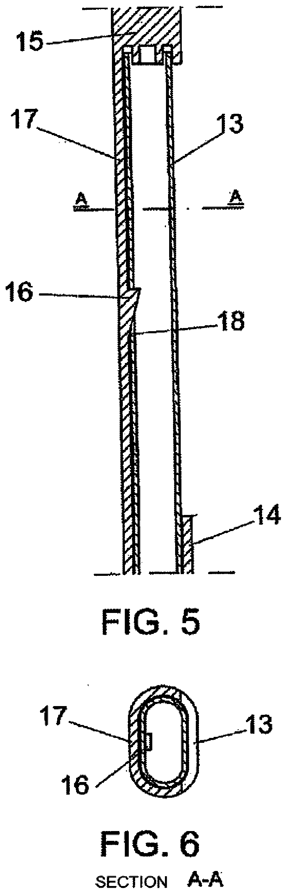

Figure 5 .- Shows a sectional detail of the form of assembly of the tubes in correspondence with the side and rear edges of the cart basket.
Figure 6 .- Shows, finally, a sectional view corresponding to the A-A cut line of the previous figure.

### PREFERRED EMBODIMENT OF THE INVENTION

As can be seen in said figures, the cart of the invention is formed by a kind of latticed basket (1) or receptacle with a pair of lower frames (2) and (3) which will form the legs that end in corresponding wheels (4) for the movement, the frames (2) of the front legs being rigidized together by means of a crossbar (5), with the arms of said front frame (2) converging forward, whilst the arms that form the rear frame (3) are more separated and are connected to the front frames (2) by means of diagonal straps (6).

The cart or basket includes a tubular handlebar (7) for handling by the user, and a rear wall (8), also latticed, which is mounted with respect to the handlebar (7) in pivoting form to be able to occupy a vertical and operating position, closing the basket, and a position tending to the horizontal, inwards, to allow the housing of carts in one another.

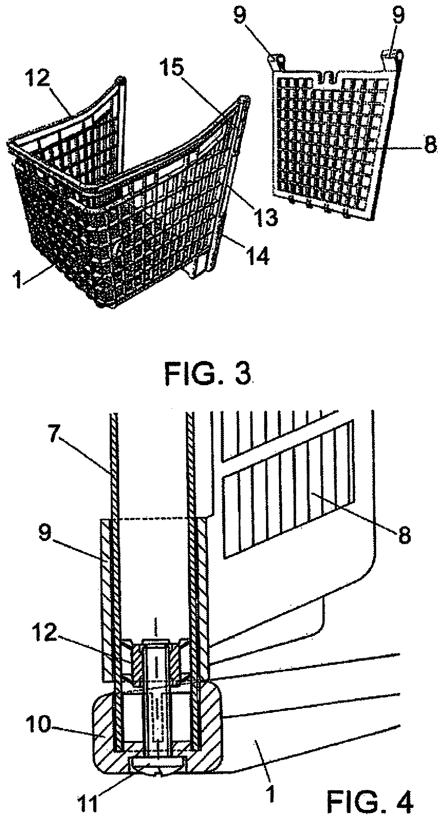

Hence, that rear pivoting wall (8), also latticed as can be seen in figure 3, has in its upper edge and in correspondence with its ends, respective cylindrical through-housings (9) for the respective handlebar tube (7), a tube fixed and retained by its ends in respective cylindrical housings by way of boxes (10) belonging to the basket (Ia) structure, all so that the base of that box or terminal (10) is traversed by a screw (11) fixed by means of threading in a nut (12) provided on the interior of the handlebar tube (7), said tube thus being fastened and therefore the wall pivoting (8) with respect to the cart structure or basket (1).

The cart, as previously mentioned, has a kind of rail (12) perimetrically, which enables its gripping on any part thereof and can be handled whatever the position of the user with respect to said.

In correspondence with the sides of basket (1), and as regards the vertical and rear edges of said basket, corresponding tubes (13) are also included which are located between tubular sections (14) that serve as a guide belonging to the structure of basket and heads (15) provided for said purpose in the upper part of said basket sides, with the particular characteristic that to allow the assembly and removal, a wedge (16) has been provided belonging to a covering sector (17) of the basket (1) structure, a wedge (16) which is embedded in an orifice (18) provided for said purpose in said tube (13).

There only remains finally to say that, in correspondence with the front frames (2), is disposed an orthogonal dihedral grille (19), which determines a lower housing to increase the cart capacity in the event that basket (1) capacity is insufficient.

## Claims

1. Cart for shopping in supermarkets and similar, formed by a basket (1) or receptacle with latticed walls, which has a rear pivoting wall (8) for coupling carts together such that they occupy a minimal volume, with lower frames (2-3) that serve as legs with wheels for moving the cart, wherein the rear pivoting wall (8) is removable and has respective cylindrical through-housings (9) at the ends of its upper edge that serve as guides for mounting the corresponding ends of a handlebar or horizontal hand grip (7) of the cart, with said housings facing respective terminals in the form of small cylindrical boxes (10) belonging to the sides of the cart basket, respective securing screws passing axially through the small boxes into corresponding nuts provided inside the handlebar, thereby allowing the rear wall to pivot with respect to the sides of the cart basket, characterized wherein, in correspondence with the vertical and rear edges of the sides of the basket (1) of the cart, respective tubes (13) have been provided housed in tubular sections (14) that serve as a guide and upper heads both belonging to the basket, between said guide elements there being provided a semi-covering (17) with a wedge (16) embeddable in an orifice established for that purpose in said tubes.

2. Cart for shopping in supermarkets and similar, according to claim 1, wherein the frames (2) that form the front legs of the cart are rigidized together by means of a crossbar in correspondence with the lower end of said legs, whilst in correspondence with the upper part said front frames are connected to rear frames by means of respective diagonal straps.

3. Cart for shopping in supermarkets and similar, according to claim 1, wherein in correspondence with the front frames or leg of the cart, an orthogonal dihedral grille (19) is positioned determining an additional lower housing of the load.

## Patentansprüche

1. Einkaufswagen für Supermärkte und dergleichen, gebildet durch einen Korb (1) oder ein Gefäß mit vergitterten Wänden, der/das eine schwenkbare hintere Wand (8) zum Verkoppeln von Wägen miteinander, sodass diese ein minimales Volumen beanspruchen, mit unteren Rahmen (2-3), die als Schenkel mit Rädern zum Bewegen des Wagens dienen, aufweist, wobei die schwenkbare hintere Wand (8) entfernbar ist und jeweils zylinderförmige Durchlasseinhausungen (9) an den Enden ihrer oberen Kante aufweist, die als Führungen zum Montieren der entsprechenden Enden einer Lenkstange oder eines horizontalen Handgriffs (7) des Wagens dienen, wobei die Durchlasseinhausungen jeweils Anschlüssen in Form kleiner zylinderförmiger Kästen (10) zugewandt sind, die zu den Seiten des Wagenkorbs gehören und jeweils Schrauben befestigen, die axial durch die kleinen Kästen hindurch in entsprechende Muttern verlaufen, die im Inneren der Lenkstange vorgesehen sind, wodurch es der hinteren Wand ermöglicht wird, in Bezug auf die Seiten des Wagenkorbes zu schwenken, **dadurch gekennzeichnet, dass** in Entsprechung mit den vertikalen und horizontalen Kanten der Seiten des Korbs (1) des Wagens jeweils Röhren (13) in röhrenförmigen Abschnitten (14) eingehaust bereitgestellt sind, die als eine Führung und obere Sammelräume dienen, die beide zu dem Korb gehören, wobei zwischen den Führungselementen eine Halbabdeckung (17) mit einem Keil (16) bereitgestellt ist, der in einer zu diesem Zweck in den Röhren hergestellten Öffnung einbettbar ist.

2. Einkaufswagen für Supermärkte und dergleichen nach Anspruch 1, wobei die Rahmen (2), die die vorderen Schenkel des Wagens bilden, mittels einer Querstange in Entsprechung mit dem unteren Ende der Schenkel miteinander versteift sind, während in Entsprechung mit dem oberen Teil die vorderen Rahmen jeweils mittels diagonaler Riemen mit hinteren Rahmen verbunden sind.

3. Einkaufswagen für Supermärkte und dergleichen nach Anspruch 1, wobei in Entsprechung mit den vorderen Rahmen oder dem vorderen Schenkel des Wagens ein orthogonales zweiflächiges Gitter (19) angeordnet ist, das eine zusätzliche untere Einhausung der Beladung bestimmt.

## Revendications

1. Chariot pour le magasinage dans les supermarchés et similaires, formé par un panier (1) ou un réceptacle avec des parois en treillis, qui présente une paroi arrière pivotante (8) pour accoupler les chariots de façon à occuper un volume minimal, avec des châssis inférieurs (2-3) qui servent de pieds avec roues pour déplacer le chariot, dans lequel la paroi arrière pivotante (8) est amovible et présente aux extrémités de son bord supérieur des logements cylindriques traversés respectifs (9) qui servent de guides pour monter les extrémités correspondantes d'un guidon ou d'une poignée horizontale (7) du chariot, avec lesdits logements placés face aux terminaisons respectives sous la forme de petites boîtes cylindriques (10) appartenant aux côtés du panier du chariot, des vis de fixation respectives passant axialement à travers des petites boîtes dans les écrous correspondants fournis à l'intérieur du guidon, permettant ainsi à la paroi arrière de pivoter par rapport aux côtés du panier du chariot, caractérisé parce que, en correspondance avec les bords verticaux et arrière des côtés du panier (1) du chariot, des tubes respectifs (13) ont été logés dans des sections tubulaires (14) qui servent de guides et des têtes supérieures appartenant les deux éléments au panier, entre lesdites éléments de guide un demi-couvercle (17) avec un coin (16) est fourni intégrable dans un orifice prévu à cet effet dans lesdits tubes.

2. Chariot pour le magasinage dans les supermarchés et similaires, selon la revendication 1, dans lequel les châssis (2) qui forment les pieds avant du chariot sont rigidifiés ensemble moyennant une barre transversale en correspondance avec l'extrémité inférieure desdits pieds, bien qu'en correspondance avec la partie supérieure lesdits châssis avant sont reliés aux châssis arrière par des sangles diagonales respectives.

3. Chariot pour le magasinage dans les supermarchés et similaires, selon la revendication 1, dans lequel, en correspondance avec les châssis avant ou le pied du chariot, une grille dièdre orthogonale (19) est positionnée, déterminant un logement inférieur supplémentaire de la charge.
